# EUROPEAN PATENT SPECIFICATION

(11) **EP 0 882 396 B1**
(45) Date of publication and mention of the grant of the patent: **28.08.2002**
(21) Application number: 98304361.3
(22) Date of filing: 02.06.1998
(51) Int. Cl.: A01K 95/00

(54) **Weight for use in angling**
Angelblei
Lest pour la pêche

(30) Priority: 02.06.1997 GB 9711372
(43) Date of publication of application: 09.12.1998
(73) Proprietor: FOX DESIGN INTERNATIONAL LIMITED, Chelmsford, Essex CM3 5HQ (GB)
(72) Inventor: Micklethwaite, Stephen, Retford, Nottinghamshire, DN22 7NG (GB)
(74) Representative: Crouch, David John

(56) References cited:
- GB-A- 878 323
- GB-A- 2 204 771
- GB-A- 2 317 800
- US-A- 2 177 007
- US-A- 3 803 749

## Description

The present invention relates to a weight for use in angling.

GB 2 204 771 A discloses a fishing weight which is assembled from seperable ports and can be converted from a bomb-like weight to an anti-tangle weight by replacement of a central spigot by an anti-tangle tube.

Otherwise, such weights, which have been used to improve the accuracy with which a fishing line can be cast, have been constructed either for suspension from a fishing line, or so that they can be arranged on the main fishing line itself. Both arrangements are favoured at different times by any given angler. The former arrangement is sometimes less likely to spook a fish, whereas in waters in which reeds are growing for example, or where there are exposed tree roots, the latter is preferred because the weight is less likely then to get snagged on the reeds or tree roots.

As a result, an angler may carry with him two sets of weights, one set of weights each of which is suspended from a fishing line, and the other set comprising weights each of which are secured on the main fishing line. The angler thus has to carry around with him two bulky and heavy sets of weights to be fully equipped.

The present invention seeks to reduce this burden.

Accordingly, the present invention is directed to a weight for use in angling, the weight having an axially extending bore and retaining means to retain insert means which are accommodated within the said bore, in which the said insert means are so constructed as to hold a line connector selectively at one or other of the ends of the said bore, the line extending through the bore when the line connector is at one of those ends.

The insert means may comprise an elongate member adapted to be received within the bore and having a hook at one end for engagement with the line connector.

The insert means may alternatively comprise a first generally tubular component for insertion into the bore and for receiving the line connector, and a second component which is generally tubular and elongate and which is also received in the bore and adapted to be connected to the first component by way of a push fit or a screw-threaded engagement.

There may be a further generally tubular component which may be threaded on to the second component at a position thereof where it protrudes from the weight, the third component being secured thereto by means of a tight fit, to prevent the second component sliding within the bore away from the third component.

Preferably, the insert means comprises both the foregoing constructions which may be used as alternatives.

It is desirable for the bore to be widened at one position along its length so that it has a shoulder constituting the said retaining means. This may be engaged by the aforesaid first component or a widened portion of the insert means.

A slot may extend along the length of the weight through from one side thereof to the bore to facilitate insertion of a fishing line therein.

Examples of a weight made in accordance with the present invention will now be described with reference to the accompanying drawings, in which:
- Figure 1: shows a perspective view of a lead portion of the weight from the side and from one end;
- Figure 2: shows an axial sectional view through the lead portion shown in Figure 1;
- Figure 3: is a cross-sectional view of the lead portion shown in Figure 1;
- Figure 4: shows an exploded perspective view of a first insert for use with the lead portion shown in Figures 1 to 3;
- Figure 5: shows the lead weight as shown in Figure 1 with the insert inserted in a through-bore of the lead portion;
- Figure 6: shows a cross-section through the lead portion and insert shown in Figure 5, with a line connector and with lines connected thereto;
- Figure 7: shows a side view of an alternative insert;
- Figure 8: shows the lead portion as shown in Figure 1 with the insert of Figure 7 inserted in the bore thereof with a line connector connected thereto and a line connected to the line connector;
- Figure 9: shows a side view of an alternative shape for the assembled weight;

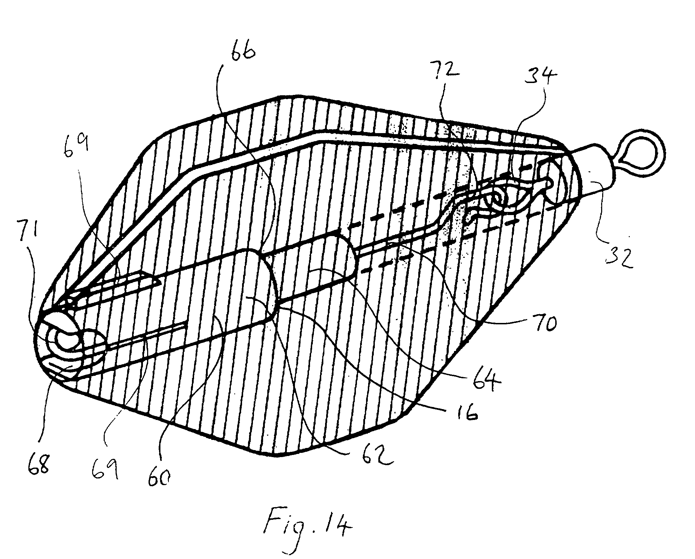

- Figures 10 and 11: show perspective and cross-sectional views of a further modified shape of lead portion;

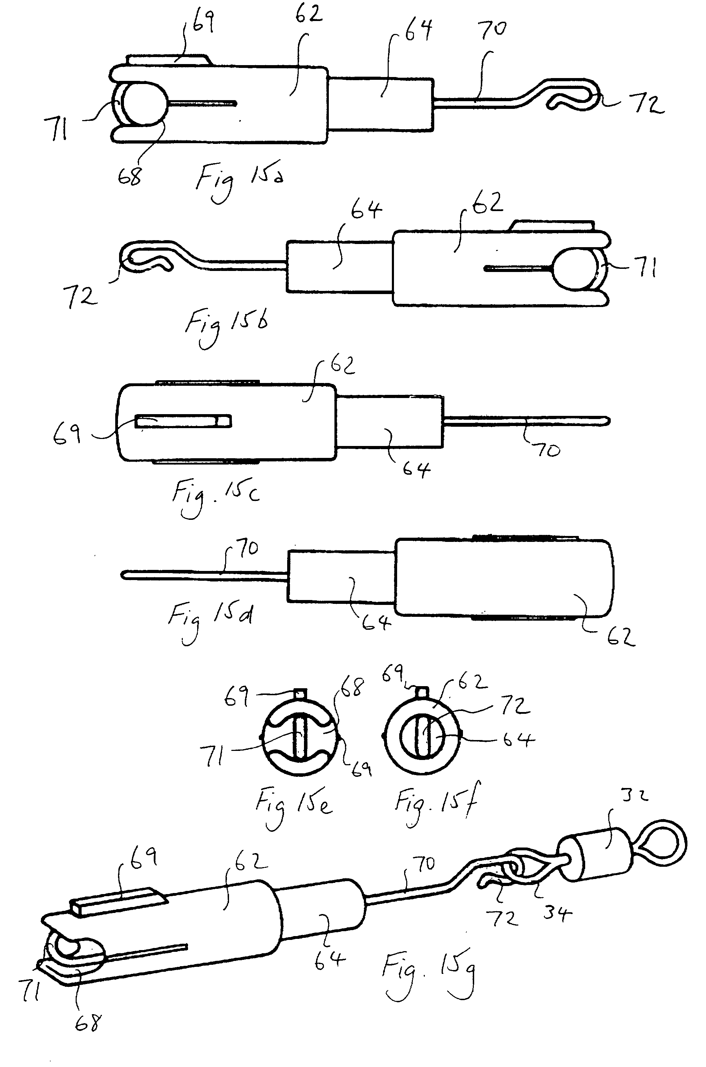

- Figures 12 and 13: show a perspective view and a sectional view, respectively, of a further modification of the shape of the lead portion;
- Figure 14: shows a perspective see-through view of a modified shape of lead portion and a modified form of insert;
- Figures 15a to 15d: show respective side views of the insert shown in Figure 14, Figures 15b and 15d showing the opposite sides shown in Figures 15a and 15b respectively;
- Figures 15e and 15f: show opposite end views of the insert shown in Figure 14; and
- Figure 15g: shows a further perspective view of the insert shown in Figure 14.

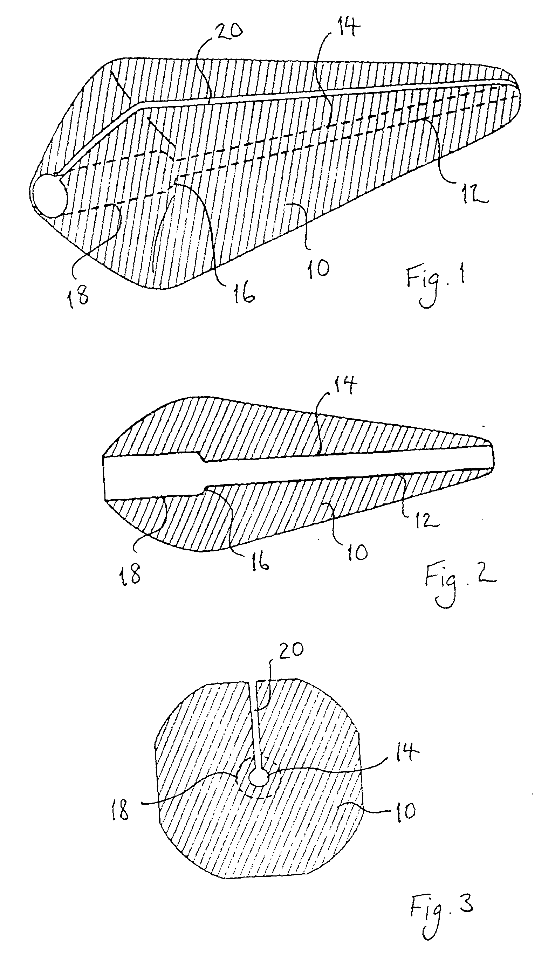

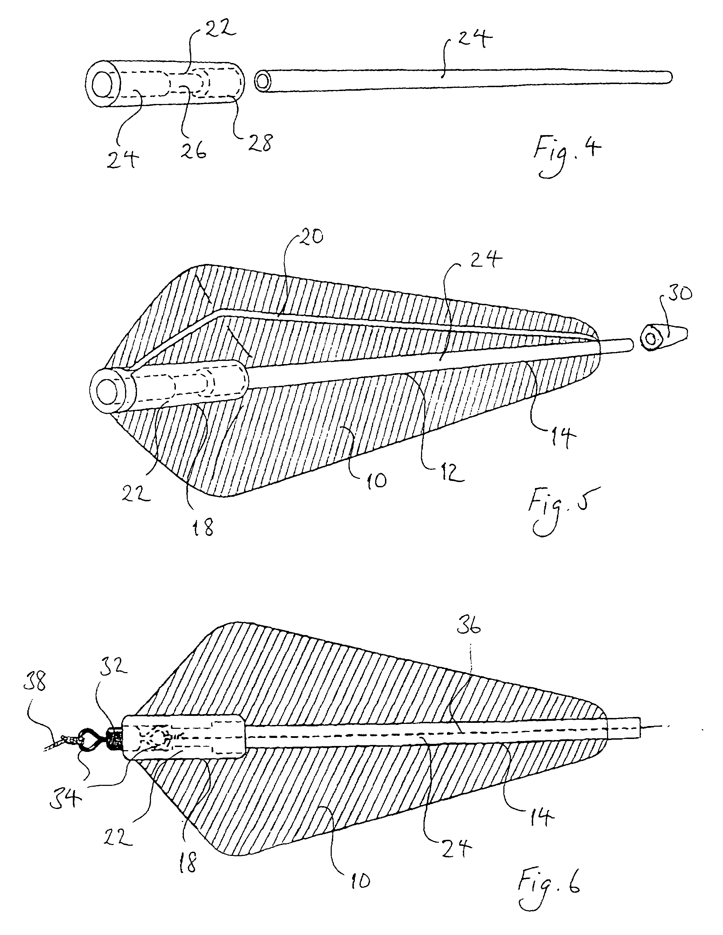

The weight shown in Figures 1 to 8 comprises a generally elongate plum-shaped lead portion 10, which has an axial through-bore 12. The bore 12 has a longer narrower portion 14 widening at a shoulder 16 to a shorter wider portion 18 at the wider end of the lead portion 10. The lead portion 10 is also provided with a slot 20 extending from one side of the weight to the bore 12.

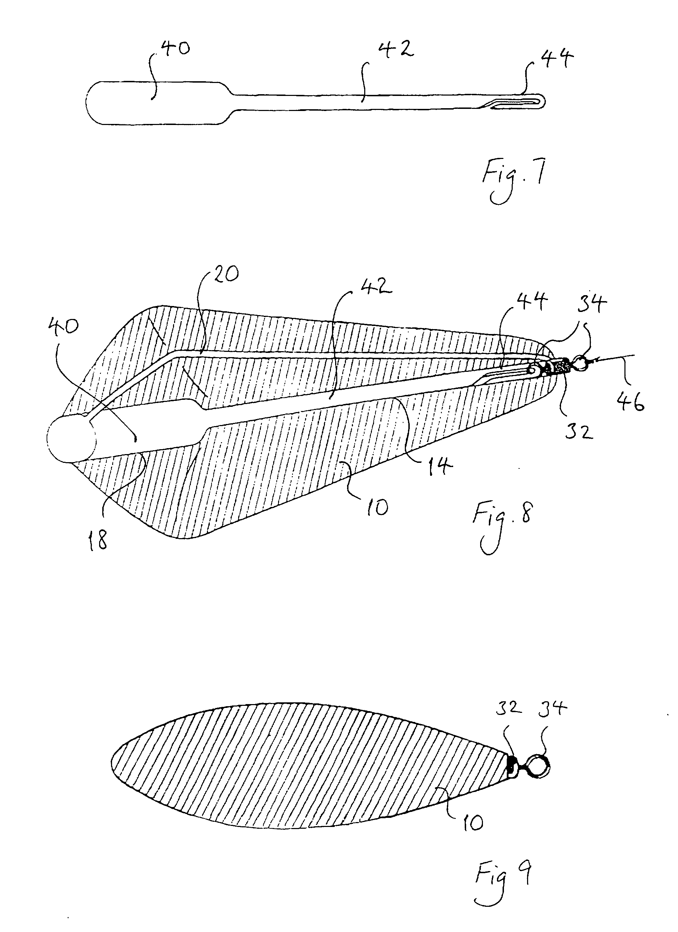

An insert shown in Figure 4 comprises a first component 22 which is a generally tubular rubber bush, and a second tubular component 24.

The outer diameter of the first tubular component 22 is generally uniform and is such as to form a snug fit within the widened portion 18 of the bore 12. The component 22 has an axial through-bore comprising a first portion 24 at an intended outer end, a neck portion 26 generally in the middle of the component 22, and a widened portion 28 at an inner end of the component 22. The portion 28 is of slightly larger diameter than the portion 24. It receives one end of the tubular component 24 as a tight fit. The insert shown in Figure 4 is further provided with a third component 30 shown in Figure 5 which is made of rubber and also has an axial through-bore, and which has an internal diameter such as to form a tight fit on the outside of an intended outer end of the tubular component 24.

The weight further comprises a line connector 32 shown in Figure 6 comprising a generally cylindrical portion having an external diameter which forms a tight fit within the portion 24 of the bore which extends through the component 22 of the insert shown in Figure 4. The connector 32 is made of a metallic material such as brass. It also has two swivellable eyelets 34, one at one end of the connector 32 and one at the other.

The insert shown in Figure 4 is such as to enable the weight to be on the main fishing line at a position between the rod and the hook. It is assembled by threading the components 30, 24 and 22, in that order, to an upper portion of the fishing line 36, tying the end of that portion of the fishing line to one of the eyelets 34, and tying the lower portion of the fishing line 38 to the other eyelet 34. With the components 22 and 24 spaced apart from one another at this stage, the upper portion of the fishing line 36 between the components 22 and 24 can now be inserted through the slot 20 into the bore 12. The component 22 is now threaded into the wider portion of the bore 12 and the component 24 is threaded into the narrower portion 14 of the bore 12 and the two are joined together by pushing the component 24 into the portion 28 of the bore which passes through the component 22 to create a tight fit. The line connector 32 is also forced by hand into the portion 24 of the through-bore component 22, so that the assembled arrangement is as shown in Figure 6 with the fishing line 36 passing through the bore 12 of the lead portion 10. When this arrangement is in use, if the line portion 36 should break, the connector 32 can work its way free from the rubber tubular potion 22 in time, because the latter is made of rubber, so that the fish is not held down by the weight indefinitely.

The alternative insert shown in Figure 7 is a single needle-like elongate plastics component comprising a relatively wide portion 40 having an external diameter which is substantially the same as the diameter of the widened portion 18 of the bore 12, and a longer thinner portion 42 which has an external diameter which is substantially the same as the narrow portion 14 of the bore 12. The end of the insert shown in Figure 7 which is further from the widened portion 40 is formed as a hook 44.

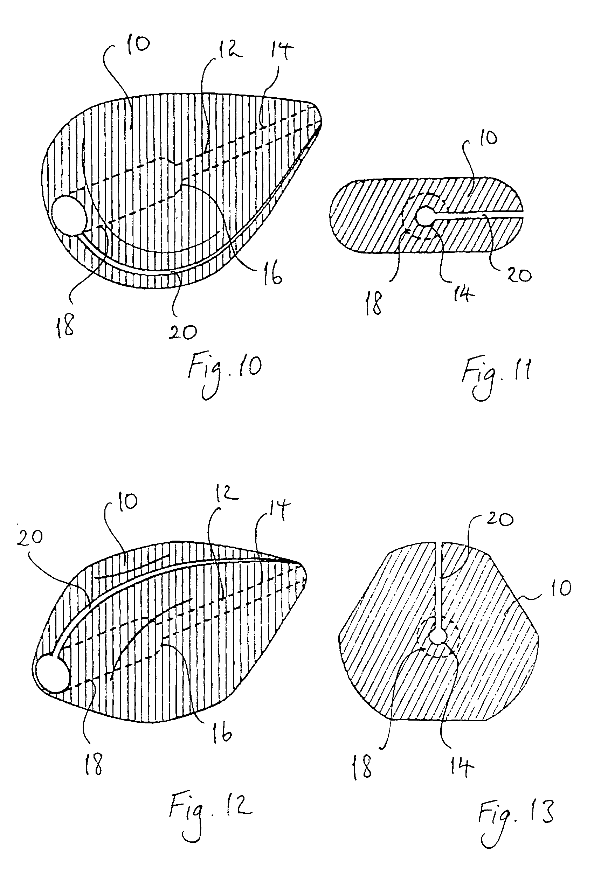

The insert shown in Figure 7 is for use when the angler wishes to suspend the weight from the fishing line rather than having it on that line. To this end, the suspension line 46 is tied to one of the eyelets 34 of the connector 32. The other eyelet 34 is engaged with the hook 44. The lead portion 10 is then slid on to the suspended line 46 by inserting the latter through the slot 20 into the bore 12. The lead portion 10 is then slid down the suspension line 46 so that the insert portion shown in Figure 7 is received into the bore 12 and is slid along it until the arrangement finally has the form shown in Figure 8.

It will be appreciated that the angler would have with him both inserts shown in Figures 4 and 7 to be used selectively according to whether the angler wishes to have the weight suspended or in-line. He may have with him a whole set of lead portions each substantially as shown in Figure 1, but all of different size and weight.

The lead portion shown in Figure 14 is generally of the same shape as that shown in Figure 12, but is a little less rounded. It is provided with an insert 60 in the form of a plastics injection moulded elongate portion 62 having an end portion 64 which is of narrower cross section to provide a shoulder 66 which abuts the corresponding shoulder 16 within the lead portion when in use to resist relative longitudinal movement between the lead portion and the insert. The other end 68 of the insert 60 is recessed. The sides of the insert 60 are formed with elongate protuberances 69 which engage corresponding slots in the lead portion to resist relative rotational movement between the insert 60 and the lead portion.

A length of bent wire 70 extends through the plastics portion 62. It has a loop 71 within the recessed end 68, to enable that end to be engaged by a hook (not shown) and thus removed from the lead portion, and is formed at its other end, which projects from the narrowed end portion 64, with a hook 72. This latter hook 72 engages an eyelet 34 of the connector 32.

Numerous variations and modifications can be made without taking the resulting construction outside the scope of the present invention as defined by the claims. For example, the through-bore 12 might be of uniform cross-section throughout its length from one end of the lead portion 10 to the other and the end of the lead portion 10 which is generally wider could be used as the retaining means, a shoulder being provided on the component 22 or the end of the portion 40 instead of within the lead portion 10. The insert shown in Figure 7 may instead be made of a metal material whether fabricated or moulded, or it may be made of wire with a helical portion within the wider portion 18 of the bore 12 to hold the insert in position. The insert shown in Figure 7 may alternatively be made adjustable in length, for example by means of screwthreaded interengaging portions thereof.

## Claims

1. A weight (10) for use in angling, the weight (10) having an axially extending bore (12) and retaining means (16) to retain insert means (22, 24 or 42 or 60) which are accommodated within the said bore, **characterised in that** the said insert means (22, 24, 42 or 60) are so constructed as to hold a line connector (32) selectively at one or other of the ends of the said bore (12), the line (36) extending through the bore (12) when the line connector (32) is at one of those ends.

2. A weight (10) according to claim 1, **characterised in that** the insert means (22, 24, 42 or 60) comprises an elongate member (42 or 60) adapted to be received within the bore (12) and having a hook (42 or 72) at one end for engagement with the line connector (32).

3. A weight (10) according to claim 1, **characterised in that** the said insert means comprises a first generally tubular component (22) for insertion into the bore (12) and for receiving the line connector (32), and a second component (24) which is generally tubular and elongate and which is also received in the bore (12) and adapted to be connected to the said first component (22) by way of a push fit or a screw-threaded engagement.

4. A weight (10) according to claim 3, **characterised in that** the weight (10) further comprises a further generally tubular component (30) which may be threaded on to the second component (24) at a position thereof where it protrudes from the weight (10), the third component (30) being secured thereto by means of a tight fit, to prevent the second component (24) sliding within the bore (12) away from the third component (30).

5. A weight (10) according to any preceding claim, **characterised in that** the insert means (22, 24, 42 or 60) comprise both an insert as set out in claim 2 and an insert as set out in claim 3 or claim 4, which inserts may be used as alternatives.

6. A weight (10) according to any preceding claim, **characterised in that** the bore (12) is widened at one position along its length so that it has a shoulder (16) constituting the said retaining means (16).

7. A weight (10) according to claim 6, **characterised in that** the shoulder (16) of the bore (12) is engaged by a widened portion of the insert means (22, 24, 42 or 60).

8. A weight (10) according to claim 7 read as appended to any one of claims 3 to 5, **characterised in that** the shoulder (16) of the bore (12) is engaged by the said first component (22).

9. A weight (10) according to any preceding claim, **characterised in that** a slot (20) extends along the length of the weight (10) through from one side thereof to the bore (12) to facilitate insertion of a fishing line (46) therein.

## Patentansprüche

1. Gewicht (10) zur Verwendung beim Angeln, wobei das Gewicht (10) eine axial verlaufende Bohrung (12) und Haltemittel (16) zum Befestigen von in der Bohrung aufgenommenen Einsätzen (22, 24 oder 42 oder 60) hat, **dadurch gekennzeichnet, dass** die Einsätze (22, 24, 42 oder 60) dazu ausgelegt sind, eine Leinenverbindung (32) wahlweise am einen oder am anderen der Enden der Bohrung (12) zu halten, wobei die Leine (36) durch die Bohrung (12) verläuft, wenn die Leinenverbindung (32) an einem dieser Enden angeordnet ist.

2. Gewicht (10) nach Anspruch 1, **dadurch gekennzeichnet, dass** die Einsätze (22, 24, 42 oder 60) ein längliches Element (42 oder 60) aufweisen, welches zur Aufnahme in der Bohrung (12) ausgelegt ist und am einen Ende einen Haken (42 oder 72) zum Ineingriffbringen mit der Leinenverbindung (32) hat.

3. Gewicht (10) nach Anspruch 1, **dadurch gekennzeichnet, dass** die Einsätze ein erstes, im Wesentlichen hülsenförmiges Bauteil (22) zum Einführen in die Bohrung (12) und zum Aufnehmen der Leinenverbindung (32) sowie ein zweites Bauteil (24) aufweisen, welches im Wesentlichen hülsenförmig und länglich ausgebildet ist und gleichfalls in der Bohrung (12) aufgenommen und zum Verbinden mit dem ersten Bauteil (22) durch einen Paßsitz oder durch Ineinandergreifen eines Schraubgewindes ausgelegt ist.

4. Gewicht (10) nach Anspruch 3, **dadurch gekennzeichnet, dass** das Gewicht (10) ferner ein weiteres, im Wesentlichen hülsenförmiges Bauteil (30) aufweist, welches in einer Stellung, in der es vom Gewicht (10) absteht, auf das zweite Bauteil (24) aufschraubbar ist, wobei das dritte Bauteil (30) an diesem durch einen Klemmsitz gesichert ist, um ein Verrutschen des zweiten Bauteils (24) in der Bohrung (12) weg vom dritten Bauteil (30) zu verhindern.

5. Gewicht (10) nach einem der vorhergehenden Ansprüche, **dadurch gekennzeichnet, dass** die Einsätze (22, 24, 42 oder 60) sowohl einen Einsatz gemäß Anspruch 2 als auch einen Einsatz gemäß Anspruch 3 oder 4 aufweisen, wobei diese Einsätze als Alternativen einsetzbar sind.

6. Gewicht (10) nach einem der vorhergehenden Ansprüche, **dadurch gekennzeichnet, dass** die Bohrung (12) in ihrer Länge an einer Stelle derart erweitert ist, dass sie eine Schulter (16) hat, welche das Haltemittel (16) bildet.

7. Gewicht (10) nach Anspruch 6, **dadurch gekennzeichnet, dass** sich an die Schulter (16) der Bohrung (12) ein erweiterter Abschnitt der Einsätze (22, 24, 42 oder 60) anschmiegt.

8. Gewicht (10) nach Anspruch 7, welcher von einem der Ansprüche 3 bis 5 abhängt, **dadurch gekennzeichnet, dass** sich an die Schulter (16) der Bohrung (12) das erste Bauteil (22) anschmiegt.

9. Gewicht (10) nach einem der vorhergehenden Ansprüche, **dadurch gekennzeichnet, dass** sich über die Länge des Gewichtes (10), ausgehend von einer seiner Seiten bis zur Bohrung (12) ein Schlitz (20) erstreckt, um das Einführen der Angelleine (46) in diese zu erleichtern.

## Revendications

1. Un lest ou plomb (10) pour utilisation à la pêche, le lest ou plomb (10) ayant un perçage (12), s'étendant axialement, et des moyens de retenue (16) devant retenir des moyens d'insert (22, 24, 42 ou 60) qui doivent être logés à l'intérieur dudit perçage, **caractérisé en ce que** lesdits moyens d'insert (22, 24, 42 ou 60) sont construits de manière à maintenir un connecteur de ligne (32) sélectivement à l'une ou l'autre des extrémités dudit perçage (12), la ligne (36) s'étendant à travers le perçage (12) lorsque le connecteur de ligne (32) est à l'une de ces extrémités.

2. Un lest ou plomb (10) selon la revendication 1, **caractérisé en ce que** les moyens d'insert (22, 24, 42 ou 60) comprennent un organe allongé (42 ou 60) adapté pour être loge à l'intérieur du perçage (12) et ayant un crochet (42 ou 72) à une extrémité, pour venir en prise avec le connecteur de ligne (32).

3. Un lest ou plomb (10) selon la revendication 1, **caractérisé en ce que** lesdits moyens d'insert comprennent un premier composant (22) globalement tubulaire, devant être inséré dans le perçage (12) et pour recevoir le connecteur de ligne (32), et un deuxième composant (24), globalement tubulaire et allongé et également logé dans le perçage (12) et adapté pour être relie audit premier composant (22), à l'aide d'un ajustement à poussée ou bien par mise en prise par filetage.

4. Un lest ou plomb (10) selon la revendication 3, **caractérisé en ce que** le lest (10) comprend en outre un composant (30) globalement tubulaire qui peut être vissé sur le deuxième composant (24), en une position de celui-ci à laquelle il fait saillie depuis le lest (10), le troisième composant (30) lui étant fixé au moyen d'un ajustement serré pour empêcher que le deuxième composant (24) ne glisse à l'intérieur du perçage (12) et ne s'échappe du troisième composant (30).

5. Un lest (10) selon une quelconque des revendications précédentes, **caractérisé en ce que** les moyens d'insert (22, 24, 42 ou 60) comprennent à la fois un insert tel qu'indiqué à la revendication 2 et un insert tel qu'indiqué à la revendication 3 ou la revendication 4, ces inserts pouvant être utilisés comme alternatives.

6. Un lest ou plomb (10) selon l'une quelconque des revendications précédentes, **caractérisé en ce que** le perçage (12) est élargi à une position dans sa longueur, faisant qu'il comporte un épaulement (16) constituant lesdits moyens de retenue (16).

7. Un lest ou plomb (10) selon la revendication 6, **caractérisé en ce que** l'épaulement (16) du perçage (12) est mis en prise par une partie élargie des moyens d'insert (22, 24, 42 ou 60).

8. Un lest ou plomb (10) selon la revendication 7, lue en annexe de l'une quelconque des revendications 3 à 5, **caractérisé en ce que** l'épaulement (16) du perçage (12) est mis en prise par ledit premier composant (22).

9. Un lest ou plomb (10) selon l'une quelconque des revendications précédentes, **caractérisé en ce qu'**une fente (20) s'étend dans la longueur du lest (10), en traversant depuis un de ses côtés vers le perçage (12), pour faciliter l'insertion d'une ligne de pêche (46).
